# EUROPÄISCHE PATENTSCHRIFT

(11) **EP 3 408 143 B1**
(45) Veröffentlichungstag und Bekanntmachung des Hinweises auf die Patenterteilung: **01.04.2020**
(21) Anmeldenummer: 17700329.0
(22) Anmeldetag: 11.01.2017
(51) Int. Cl.: B60R 13/10

(54) **VERFAHREN ZUR HERSTELLUNG EINES RETROREFLEKTIERENDEN KFZ-KENNZEICHENSCHILDS, RETROREFLEKTIERENDES KFZ-KENNZEICHENSCHILD SOWIE VORRICHTUNG ZUR DURCHFÜHRUNG DES VERFAHRENS**
METHOD FOR MANUFACTURING A RETRO-REFLECTING VEHICLE NUMBER PLATE, RETRO-REFLECTING VEHICLE NUMBER PLATE, AND DEVICE FOR IMPLEMENTING THE METHOD
PROCÉDÉ DE FABRICATION D'UNE PLAQUE DE IMMATRICULATION DE VÉHICULE RÉTRO-RÉFLÉCHISSANT, PLAQUE DE IMMATRICULATION RÉTRO-RÉFLÉCHISSANT, ET DISPOSITIF DE MISE EN UVRE DU PROCÉDÉ

(30) Priorität: 04.04.2016 DE 102016106065
(43) Veröffentlichungstag der Anmeldung: 05.12.2018
(60) Teilanmeldung: 19219268.0
(73) Patentinhaber: Erich Utsch AG, 57080 Siegen (DE)
(72) Erfinder: LASAGNI, Andrés, Fabián, 01723 Grumbach (DE); KUNZE, Tim, 01157 Dresden (DE); PFUNDSTEIN, Bernd, 35630 Ehringshausen (DE)
(74) Vertreter: Patentanwälte Bauer Vorberg Kayser
(86) Internationale Anmeldenummer: PCT/EP2017/050493
(87) Internationale Veröffentlichungsnummer: WO 2017/174221

(56) Entgegenhaltungen:
- DE-A1- 10 226 718
- DE-A1-102004 017 094
- DE-A1-102012 011 343
- US-B1- 6 594 926

## Beschreibung

Gegenstand der vorliegenden Erfindung ist ein Verfahren zur Herstellung eines retroreflektierenden Kfz-Kennzeichenschilds, sowie eine Vorrichtung zur Durchführung des Verfahrens. Insbesondere betrifft die Erfindung ein Herstellverfahren für ein Kfz-Kennzeichenschild mit neuartigen Sicherheitsmerkmalen, sowie eine zur Ausführung dieses Verfahrens geeignete Vorrichtung zur Herstellung eines Kfz-Kennzeichenschilds mit neuartigen Sicherheitsmerkmalen.

Kfz-Kennzeichenschilder mit optisch wahrnehmbaren Sicherheitsmerkmalen sind grundsätzlich seit langem bekannt. Optisch wahrnehmbare Sicherheitsmerkmale werden auch als "Wasserzeichen" bezeichnet. Aus dem Stand der Technik sind Wasserzeichen bekannt, die mittels Druckverfahren erzeugt werden, als auch durch Laserbehandlung erzeugte Wasserzeichen. So hat z.B. die Minnesota Mining & Mfg. Company, Minnesota, USA (handelnd im geschäftlichen Verkehr unter 3M) retroreflektierende Folien zur Herstellung von retroreflektierenden Kfz-Kennzeichen-schildern im Programm, die zweierlei optisch wahrnehmbare Sicherheitsmerkmale umfasst, welche von 3M unter den Bezeichnungen Ensure™ Image und Ensure™ Virtual Security Thread vertrieben werden. Zum Anmeldezeitpunkt handelte es sich hierbei beispielsweise um die Folien der Serien mit der 3M-Produktbezeichnung 4750E sowie 4750T.

Als Ensure™ Sicherheitsmerkmal wird eine optische Markierung der Folie bezeichnet, die bei senkrechter Orientierung der Folie nur unter einem Betrachtungswinkel von etwa 30° gegen die Horizontale sichtbar ist. Ansonsten erscheint die Folie einheitlich retroreflektierend, das d.h. das Sicherheitsmerkmal ist unsichtbar. Ein Verfahren zur Herstellung des Ensure™ Image Sicherheitsmerkmals wird z.B. in der US 4,691,993 A oder in der EP 0 203 752 B1 beschrieben. Das Ensure™ Image Sicherheitsmerkmal wird durch eine gezielte lokale Beschädigung der in der retroreflektierenden Folie enthaltenen metallischen Reflexionsschicht mittels Laserbestrahlung verwirklicht. Es setzt demnach die Existenz einer dezidierten metallischen Reflexionsschicht in der retroreflektierenden Folie voraus und kann demnach nicht in retroreflektierende Folien auf Basis von eingebetteten Mikroprismen eingebracht werden.

Unter der Bezeichnung Ensure™ Virtual Security Thread wird eine retroreflektierende Folie vermarktet, die ein optisch wahrnehmbares Sicherheitsmerkmal umfasst, welches in das Material der Folie eingebracht ist und dreidimensional erscheint. Es umfasst zwei virtuelle Bilder, von denen eines oberhalb der Ebene des Schilds zu schweben scheint und eines unterhalb. Es ist bei direkter Betrachtung der Folie auch aus größerem Abstand sichtbar und lässt sich auch mit dem Sicherheitsmerkmal Ensure™ Image kombinieren. Weitere Informationen zu retroreflektierenden Folien mit dem Sicherheitsmerkmal Ensure™ Virtual Security Thread ergeben sich auch aus der EP 1 602 946 B1. Auch das Sicherheitsmerkmal Ensure™ Virtual Security Thread kann nur in retroreflektierende Folien mit eigebetteten Mikrolinsen und metallischer Reflexionsschicht eingebracht werden.

Das Sicherheitsmerkmal Ensure™ Virtual Security Thread lässt sich in der Praxis nur bei der Folienherstellung selbst einbringen. Eine Änderung des eingebrachten Sicherheitsmerkmals, z.B. dessen Kontur, ist daher dem Folienhersteller vorbehalten, was die Beschaffung kleinerer Mengen von Folie versehen mit auf Kundenwunsch individualisiertem Sicherheitsmerkmal problematisch und insbesondere kostenintensiv macht. Die Anbringung von auf Kundenwunsch individualisierten Sicherheitsmerkmalen dieser Typen beim Schildhersteller ist damit in der Praxis unmöglich.

Weiterhin ist die Verwendung von optischen Hologrammsiegeln als Sicherheitsmerkmal bekannt, die in einem separaten Herstellungsverfahren auf einer separaten Trägerfolie erzeugt werden. So bietet die Fa. Leonhard Kurz Stiftung & Co. KG sogenannte Hologrammsiegelfolien an, die einen Polyesterträger umfassen, auf dem ein Lackpaket bestehend aus einer Kleberschicht, einer strukturierten Metallisierung zur Ausbildung des optischen Hologrammsiegels, einer Replizierschicht und einem Schutzlack ablösbar angeordnet ist. Im Rahmen der Herstellung eines Kfz-Kennzeichenschilds werden diese Hologrammsiegel mittels eines Thermotransferverfahrens von der Polyesterfolie auf die Oberfläche des Kfz-Kennzeichenschilds übertragen und mit dessen Oberfläche thermisch verschweißt, Derartige optische Hologrammsiegel sind optisch gut verifizierbar und sind insbesondere auch auf retroreflektierenden Folien ohne metallische Reflexionsschicht anbringbar, also beispielweise auf retroreflektierenden Folien, die auf mikroprismatischen Elementen basieren. Ihre Anbringung auf dem Kfz-Kennzeichenschild ist jedoch technisch aufwendig und erhöht daher die Produktionskosten des Kfz-Kennzeichenschilds. So wird in der Praxis vielfach beobachtet, dass der Polyesterträger des Siegels nach der Übertragung des Siegels auf die Oberfläche des Kfz-Kennzeichenschilds bereichsweise an der Oberfläche des Schilds anhaftet, so dass eine Vorrichtung benötigt wird, die den Polyesterträger wieder vom Kfz-Kennzeichenschilds ablöst. Hierbei besteht zusätzlich das Risiko einer mechanischen Beschädigung der Oberfläche des Kfz-Kennzeichenschilds. Darüber hinaus erhöht die Verwendung derartiger Hologrammsiegel in der Kfz-Kennzeichenschildherstellung die logistischen Anforderungen, da zusätzliche separate Komponenten verwendet werden, die in der Regel von einem weiteren Lieferanten bezogen werden müssen, was sich wiederum nachteilig auf die Produktionskosten auswirkt. Auch der erforderliche Polyesterträger erweist sich in der Praxis als nachteilig. Das Handling des bandförmigen Polyesterträgers in der Zufuhr der Hologrammsiegel als auch in der Rückführung nach dem Siegelprozess ist aufwendig, die hierzu erforderlichen mechanischen Komponenten erfordern relativ viel Platz, so dass eine Integration in bestehende Produktionsanlagen für die Kfz-Kennzeichenschildherstellung problematisch ist. Weiterhin fällt durch den zurückbleibenden Polyesterträger relativ viel Abfall an, was unter Umweltschutzgesichtspunkten nachteilig ist. Weiterhin sind derartige Hologrammsiegel wegen der enthaltenen Metallschicht naturgemäß intransparent, was insbesondere bei retroreflektierenden Kfz-Kennzeichen-schildern zu lokalen Bereichen mit fehlender Retroreflektivität führt, was unerwünscht oder gemäß lokaler Zulassungsvorschriften sogar unzulässig sein kann. Schließlich ist die Produktion von gemäß Kundenanforderung individualisierten Hologrammen teuer, da für jedes individuelle Motiv ein Master für die Hologrammherstellung benötigt wird, welches aufwendig herzustellen ist. Die Erstellung von Kleinserien verbietet sich daher in der Regel aus Kostengründen.

Die DE 10 2004 017 094 A1 offenbart ein Verfahren zur Herstellung eines Kfz-Kennzeichenschildes, wobei verschiedene Schichten, unter anderem eine optisch variable Schicht, die ein Sicherheitsmerkmal bereitstellen kann, auf dem Schild vorgesehen sein können. Mit einem Prägestempel können dabei makroskopische Strukturen hervorgerufen werden, die einen optischen Effekt bewirken. Nachteilig ist jedoch, dass ein Prägestempel nur eine bestimmte, vorgegebene makroskopische Struktur abformen kann und das Verfahren somit kostenintensiv ist, wenn beispielsweise ein individualisiertes Sicherheitsmerkmal vorgesehen werden soll.

Aufgabe der vorliegenden Erfindung ist es daher, ein kostengünstiges Verfahren zur Herstellung eines Kfz-Kennzeichenschilds mit integriertem Sicherheitsmerkmal anzugeben, welches kostengünstig ist und die vorgenannten Nachteile vermeidet. Weiterhin ist es Aufgabe der vorliegenden Erfindung, ein vorteilhaftes Kfz-Kennzeichenschild mit integriertem Sicherheitsmerkmal sowie eine zur Ausführung des erfindungsgemäßen Verfahrens geeignete Vorrichtung anzugeben, welche mithin auch zur Herstellung eines erfindungsgemäßen Kfz-Kennzeichenschilds geeignet ist.

Gelöst wird diese Aufgabe durch ein Herstellungsverfahren für ein Kfz-Kenn-zeichenschild gemäß Anspruch 1, sowie eine Herstellungs-Vorrichtung gemäß Anspruch 5.

Die Unteransprüche betreffen verschiedene voneinander unabhängige, vorteilhafte Weiterbildungen der vorliegenden Erfindung, deren Merkmale von Fachmann im Rahmen des technisch Sinnvollen frei miteinander kombiniert werden können. Dies gilt insbesondere auch über die Grenzen der verschiedenen Anspruchskategorien hinaus.

Das erfindungsgemäße Verfahren lässt sich oftmals in Form weniger zusätzlicher Verfahrensschritte unmittelbar in bestehende Verfahrensabläufe zur Herstellung von Kfz-Kennzeichenschildern integrieren, ohne Änderungen dieser Verfahrensabläufe erforderlich zu machen. Die mittels des Verfahrens erzeugten Kfz-Kennzeichenschilder weisen ein neuartiges, optisch wahrnehmbares Sicherheitsmerkmal auf, welches auf einer optisch wahrnehmbaren, flächenhaft ausgedehnten Sicherheitsstruktur basiert, die in die vorderseitige Oberfläche des Schildrohlings eingebracht ist und auf regelmäßigen, erhabenen oder vertieften Strukturen in der Oberfläche der Schildrohlings beruht. Diese Kennzeichenschilder bieten daher ein hohes Maß an Fälschungssicherheit, da die das Sicherheitsmerkmal ausbildende Sicherheitsstruktur es integral mit dem Material des Kennzeichenschildrohlings, hier insbesondere mit der Schildplatine oder mit einer auf dieser auflaminierten Kunststofffolie, verbunden ist. Darüber hinaus stehen verschiedene Verfahren zur Erzeugung einer derartigen Sicherheitsstruktur zur Verfügung, die sich insbesondere zu einer Ausführung im Rahmen eines Herstellungsverfahrens für ein Kfz-Kennzeichenschild gemäß Stand der Technik eignen, womit das erfindungsgemäße Verfahren auch direkt beim Schildhersteller anwendbar ist. Diese Verfahren erlauben darüber hinaus eine gute bis hohe Flexibilität bezüglich der eingebrachten Sicherheitsstruktur bezüglich deren Motiv und Größe, deren Anordnung und Ausrichtung auf der Schildplatine sowie deren Farbeindruck, so dass eine Kundenspezifische Individualisierung auch bei Kleinserien wirtschaftlich möglich wird. Schließlich erfordert die neuartige Sicherheitsstruktur keinerlei intransparente, z.B. metallische Reflexionsschicht, so dass sie vorteilhaft auch auf retroreflektierenden Schildrohlingen oder Schildrohlingen angebracht werden kann, die eingebettete zusätzliche, optisch wahrnehmbare Sicherheitsmerkmale wie z.B. die vorbeschriebenen Sicherheitsmerkmale Ensure™ Image oder Ensure™ Virtual Security Thread aus dem Hause 3M umfassen, ohne diese durch Überdeckung unlesbar bzw. unerkennbar und damit unwirksam zu machen.

Ein erfindungsgemäßes Verfahren ist zur Herstellung eines Kfz-Kennzeichenschilds vorgesehen. In seiner einfachsten Ausprägung umfasst es den Verfahrensschritt des Bereitstellens eines flächenhaft ausgedehnten Schildrohlings, z.B. einer Schildplatine aus Kunststoff oder einer metallischen Schildplatine mit auflaminierter eingefärbter Kunststofffolie. Insbesondere kann es sich bei einem Schildrohling bereits um ein gebrauchsfertiges Kfz-Kennzeichenschild handeln, welches im Rahmen des erfindungsgemäßen Verfahrens nur noch mit der erfindungsgemäßen Sicherheitsstruktur versehen wird.

Erfindungsgemäß wird nun auf geeignete Weise in die vorderseitige Oberfläche des Schildrohlings eine optisch wahrnehmbare, insbesondere flächenhaft ausgedehnte Sicherheitsstruktur eingebracht. Hierunter sollen Verfahren fallen, die das Material des Schildrohlings an dessen vorderseitigen Oberfläche entweder lokal umformen oder lokal abtragen. Explizit nicht unter diese Formulierung sollen Verfahren fallen, bei denen zusätzliches Material auf die vorderseitige Oberfläche des Schildrohlings aufgebracht wird.

Diese erfindungsgemäß eingebrachte Sicherheitsstruktur umfasst flächenhaft ausgedehnte, regelmäßige, erhabene oder vertiefte Strukturen in der Oberfläche des Schildrohlings, die so ausgestaltet sind, dass die eingebrachte Sicherheitsstruktur einen auf optischer Interferenz beruhenden optischen Effekt, insbesondere Farbeffekt, zeigt. Die regelmäßigen Abstände der eingebrachten Strukturen liegen daher vorteilhaft in der Größenordnung der Wellenlänge sichtbaren Lichts, insbesondere im Bereich zwischen 150 Nanometern und 30 Mikrometern, besonders bevorzugt zwischen 450 und 1500 Nanometern.

Im Rahmen der vorliegenden Erfindung kann die dominante Strukturgröße der eingebrachten Mikrostruktur im o.g. Rahmen auf Kundenbedürfnisse zugeschnitten werden. So können Mikrostrukturen erzeugt werden, die unter bestimmten Winkeln durch konstruktive Interferenz im sichtbaren Bereich reflektieren und daher unmittelbar mit dem menschlichen Auge als farbige Bilder wahrnehmbar sind. Es können jedoch auch Mikrostrukturen erzeugt werden, die in Wellenlängenbereichen reflektieren, welche für das menschliche Auge unsichtbar sind, z.B. im UV oder im nahen IR. Derartige Strukturen sind für eine maschinelle Echtheitsprüfung prädestiniert.

In einer ersten vorteilhaften Weiterbildung weist der Schildrohling retroreflektierende Eigenschaften auf. Besonders bevorzugt basieren diese retroreflektierenden Eigenschaften auf in den Schildrohling eingebetteten bzw. integral mit diesem ausgebildeten (mikro)prismatischen Elementen.

In einer weiteren vorteilhaften Weiterbildung, die alternativ oder ergänzend zu der vorgenannten ersten vorteilhaften Weiterbildung anzuwenden ist, weist der Schildrohling ein zusätzliches optisch wahrnehmbares Sicherheitsmerkmal auf, welches in das Material des Schildrohlings eingebettet ist. Hierbei kann es sich beispielsweise um die vorgenannten Sicherheitsmerkmale handeln, die von der Fa. 3M unter den Bezeichnungen Ensure™ Image bzw. Ensure™ Virtual Security Thread angeboten werden. Hierzu ist umfasst der Schildrohling eine z.B. metallische Schildplatine, die mit einer retroreflektierenden Folie der Fa. 3M eines der Typen 4750E oder 4750T kaschiert ist, d.h. eine solche Folie ist auf die Vorderfläche der Schildplatine auflaminiert.

Im Zusammenhang mit den vorgenannten vorteilhaften Weiterbildungen ergeben sich besondere Vorteile, wenn die erfindungsgemäße, optisch wahrnehmbare Sicherheitsstruktur in solchen Bereichen des Kfz-Kennzeichenschilds angeordnet wird,
a) in denen der Schildrohling retroreflektierende Eigenschaften aufweist, oder
b) unterhalb derer das in das Material des Schildrohlings eingebettete, optisch wahrnehmbare zusätzliche Sicherheitsmerkmal angeordnet ist.

Da das erfindungsgemäße Sicherheitsmerkmal nur unter bestimmten Winkeln konstruktive Interferenz zeigt und damit dem Beobachter nur unter bestimmten Winkeln als farbige Struktur erscheint, ist das erfindungsgemäße Sicherheitsmerkmal bei senkrechter Aufsicht auf den Schildrohling (bzw. das gebrauchsfertige Kfz-Kennzeichenschild) im Wesentlichen unsichtbar bzw. transparent. Wird es in oder auf der Oberfläche einer transparenten Schicht ausgebildet, die z.B. aus einem Kunststoff bestehen kann, so bleiben durch die transparente Schicht hindurch optisch wahrnehmbare Eigenschaften der Folie bzw. des Schildrohlings wie z.B. in die Folie eingebettete zusätzliche Sicherheitsmerkmale oder eine Retroreflektivität weitestgehend erhalten. Insbesondere bedeutet dies, dass es möglich ist, die erfindungsgemäße Sicherheitsstruktur großflächig auszubilden, insbesondere so groß, dass sich die Sicherheitsstruktur im Wesentlichen über die gesamte Oberfläche des Schildrohlings erstreckt. Dies stellt einen besonderen Vorteil der mittels der erfindungsgemäßen Sicherheitsstruktur und damit eines mit einer solchen ausgerüsteten Kfz-Kennzeichenschilds dar.

Im weiteren Verfahrensgang zur Herstellung eines gebrauchsfertigen individualisierten Kfz-Kennzeichenschilds wird der Schildrohling mit einer individuellen Kennzeichenlegende versehen, die z.B. auf die vorderseitige Oberfläche aufgedruckt sein kann. Alternativ kann die Kennzeichenlegende bei Verwendung eines prägefähigen Materials für den Schildrohling auch in den Schildrohling geprägt sein, z.B. als erhabene Prägung. Eine geprägte Kennzeichenlegende kann auch zusätzlich eingefärbt sein, was insbesondere mittels eines Übertrags von einer Heißprägefolie in einem Thermotransferverfahren oder mittels Abwalzen mit einer Farbwalze möglich ist. Eine Kennzeichenlegende kann aber auch durch Anbringung von separat ausgebildeten individuellen Zeichen auf der vorderseitigen Oberfläche des Schildrohlings ausgebildet werden.

Im Kontext der vorliegenden Anmeldung wird unter einem Kfz-Kennzeichenschild grundsätzlich ein Schild verstanden, welches bereits mit einer individuellen Kennzeichenlegende versehen ist. Als Kennzeichenrohling wird hingegen ein Schild verstanden, welches noch nicht mit einer individuellen Kennzeichenlegende versehen ist. Ist in den Ansprüchen jedoch von einem Kfz-Kennzeichenschild die Rede, so soll diese Formulierung sowohl ein gebrauchsfertiges, mit einer Kennzeichenlegende individualisiertes Kfz-Kennzeichenschild umfassen als auch einen Kennzeichenrohling im vorgenannten Sinne. Hiermit soll insbesondere klargestellt werden, dass im Rahmen der vorliegenden Erfindung die Einbringung der erfindungsgemäßen Sicherheitsstruktur in die vorderseitige Oberfläche sowohl an einem Schildrohling als auch an einem gebrauchsfertigen, mit einer Kennzeichenlegende individualisierten Kfz-Kennzeichenschild möglich ist. Dies bezieht sich insbesondere auf das erfindungsgemäße Verfahren gemäß Anspruch 1 als auch auf das Kfz-Kennzeichenschild, wobei sich der Schutz aus letzterem explizit auch auf Schildrohlinge im oben genannten Sinne erstrecken soll.

In einer vorteilhaften Ausprägung des erfindungsgemäßen Verfahrens werden zur Bereitstellung eines Schildrohlings die folgenden Verfahrensschritte ausgeführt:
a) Bereitstellen einer Schildplatine,
b) Bereitstellen einer Folie mit einer transparenten Deckschicht, und
c) Auflaminieren der Folie auf die Schildplatine, so dass die transparente Deckschicht der Folie die vorderseitige Oberfläche des Schildrohlings ausbildet.

Dabei kann das Einbringen der optisch wahrnehmbaren Sicherheitsstruktur in die Folie sowohl vor als auch nach dem Auflaminieren der Folie durchgeführt werden.

Dabei kann die Folie vorteilhaft eingefärbt sein, z.B. um nationalen Zulassungsvorschriften zu entsprechen.

Sie kann darüber hinaus bereits bereichsweise farbig bedruckt sein, z.B. mit einem die spätere Kennzeichenlegende umgreifenden umlaufenden Rahmen. Auch Hoheitszeichen oder auch dekorative Elemente können bereits aufgedruckt sein.

In einer besonders bevorzugten Ausgestaltung weist die Folie, welche auf die Schildplatine auflaminiert wird, retroreflektierende Eigenschaften auf. Insbesondere kann es sich um eine Folie mit in einer transparenten Kunststoffschicht eingebetteten Mikrolinsen und dahinterliegender Reflexionsschicht handeln, oder um eine Folie mit in einer transparenten Kunststoffschicht eingebetteten mikroprismatischen Elementen. In beiden Folientypen kann oberhalb der Mikrolinsen bzw. der mikroprismatischen Elemente eine weitere transparente Schicht z.B. aus einem geeigneten Kunststoff angeordnet sein.

Weiterhin kann die Folie, welche auf die Schildplatine auflaminiert wird, mit zusätzlichen Sicherheitsmerkmalen ausrüstet sein, die insbesondere für eine visuelle bzw. optische Überprüfung geeignet sind. So kann die Folie beispielsweise mit den von der Fa. 3M angebotenen Sicherheitsmerkmalen Ensure™ Image oder/und Ensure Ensure™ Virtual Security Thread ausgerüstet sein. Aber auch Folien anderer Folienhersteller, die alternative Sicherheitsmerkmale aufweisen, können vorteilhaft verwendet werden. Schließlich ist es möglich, dass die aufzulaminierende oder bereits auflaminierte Folie vom Anwender des erfindungsgemäßen Verfahrens mit zusätzlichen, vorteilhaft optisch erkennbaren Sicherheitsmerkmalen, ausgerüstet wird, z.B. gemäß der Lehre der vorgenannten US 4,691,993 A. Das dort beschriebene Verfahren basiert auf einer Laserbehandlung einer retroreflektierenden Folie mit eingebetteten Mikrolinsen und kann vorteilhaft auch in den Ablauf des erfindungsgemäßen Verfahrens integriert werden.

In einer nicht erfindungsgemäßen Ausgestaltung des Verfahrens wird die optisch wahrnehmbare Sicherheitsstruktur mittels mechanischen Prägens, insbesondere mittels Heißprägens, von einem strukturierten Stempel oder einer strukturierten Walze in die vorderseitige Oberfläche des Schildrohlings übertragen. Dabei kann der Stempel oder die Walze insbesondere aus einem Metall, vorzugsweise einem geeigneten Stahl, insbesondere Edelstahl, gefertigt sein, oder auch aus einem geeigneten keramischen Werkstoff. Auch Nickel hat sich besonders bewährt, insbesondere bei der Herstellung von Sleeves, d.h. von hülsenartigen Prägeformen, die i.A. zum Aufschieben auf Prägewalzen vorgesehen sind. Darüber hinaus sind auch beschichtete metallische Materialien grundsätzlich einer Mikrostrukturierung zugänglich und können daher im Rahmen des Verfahrens für Prägestempel oder -walzen verwendet werden. Zur Vereinfachung wird im Folgenden stets nur von Prägestempeln gesprochen. Diese Formulierung soll aber explizit auch Prägewalzen und Sleeves mit umfassen.

Werden metallische Werkstoffe für den Prägestempel verwendet, so hat es sich bewährt, diesen vor der Strukturierung Hochglanzzupolieren, insbesondere wenn der Stempel mittels Laserstrukturierung strukturiert wird, worauf im Folgenden noch eingegangen wird.

Der bevorzugte Temperaturbereich für das Heißprägen wird wesentlich von den für den Schildrohling verwendeten Materialen bestimmt. Typische Heißprägetemperaturen liegen zwischen 70°C und 180°C, wobei Temperaturen um 150°C bevorzugt werden. Die letztgenannten Temperaturen haben sich insbesondere bei der Prägung von Schildrohlingen bewährt, die eine auf eine Schildplatine auflaminierte Kunststofffolie umfassen. Insbesondere vorteilhaft ist diese Temperatur vorteilhaft bei der Verwendung handelsüblicher retroreflektierender Folien für die Kfz-Kennzeichenschildherstellung, wie sie z.B. von den Herstellern 3M, Avery und Orafol vielfältig angeboten werden.

Typische Prägedrücke liegen bei maximal 10 Tonnen bei einer Prägefläche von 20 x 20 mm², in der Regel sind aber - insbesondere beim Heißprägen - bereits geringere Drücke im Bereich von 1 bis 2 Tonnen ausreichend.

Die Verwendung von Prägewalzen erlaubt einen kontinuierlichen Prägeprozess, mit dem z.B. bandartige Sicherheitsstrukturen analog zu dem Ensure™ Virtual Security Thread der Fa. 3M erzeugt werden. In einer bevorzugten Ausgestaltung des Verfahrens wird die Sicherheitsstruktur daher mittels Abwalzen der Oberfläche des Schildrohlings mit einer strukturierten Prägewalze oder einem Sleeve erzeugt.

Die Verwendung von Prägestempeln erlaubt es, auch großflächige Sicherheitsstrukturen zu erzeugen, die durch Prägen mittels mehrerer Stempel erzeugt werden können. Dabei kann insbesondere eine gleichzeitige Prägung mittels mehrerer Stempel mittels einer Prägepresse erfolgen, was die Effizienz des Verfahrens erhöht. Dabei müssen die Prägestempel nicht aneinander angrenzen, sondern können auch beabstandet voneinander angeordnet werden, z.B. um zugleich Prägungen in allen vier Ecken des Schildrohlings vorzunehmen. Besondere Vorteile ergeben sich bei der Verwendung verschiedener Prägestempel, wenn sich diese bezüglich des eingebrachten Motivs bzw. der eingebrachten Struktur zu einem Gesamtmotiv oder einer Gesamtstruktur ergänzen, z.B. gemeinschaftlich die vier Ecken eines Rechtecks ausbilden.

Um die Sicherheitsstruktur mittels eines mechanischen Prägeverfahrens zu erzeugen ist es erforderlich, dass das die Oberfläche des Schildrohlings ausbildende Material, z.B. die oberste Lage einer auf eine Schildplatine auflaminierten Kunststofffolie oder das Material des Schildrohlings selbst, mechanisch prägbar ist. Besonders bevorzugt ist das Material heißprägefähig, d.h. unter Einwirkung von Wärme prägefähig.

Grundsätzlich ist sowohl eine direkte Strukturierung des Prägestempels mittels eines geeigneten Strukturierungsverfahrens, welches unmittelbar auf den Prägestempel einwirkt, als auch eine indirekte Strukturierung möglich. Unter indirekter Strukturierung ist zu verstehen, dass mittels eines geeigneten Strukturierungsverfahrens ein Negativ des gewünschten Prägestempels erzeugt wird, welches dann in einem nachfolgenden Verfahrensschritt in die Oberfläche des Prägestempels unter Ausbildung des gewünschten Positivs übertragen wird.

Bevorzugt wird die Strukturierung des Stempels mittels direkter oder indirekter Laserstrukturierung eines Werkstücks aus einem für eine Verwendung als Prägestempel geeigneten Werkstoff erzeugt. Hierbei soll unter "direkter Laserstrukturierung" verstanden werden, dass die zur Strukturierung verwendete Laserstrahlung unmittelbar auf den Stempel einwirkt und dort die beim Prägen in das zu prägende Material abgeformte mechanische Struktur erzeugt. Unter "indirekter Laserstrukturierung" soll hingegen verstanden werden, dass die zur Strukturierung verwendete Laserstrahlung unmittelbar auf einen geeigneten Negativstempel einwirkt und dort eine mechanische Struktur erzeugt. Diese wird dann auf geeignete Weise als Positiv in die Oberfläche des Prägestempels übertragen, wodurch die beim Prägen in das zu prägende Material abgeformte mechanische Struktur erzeugt wird. Insbesondere kann die Strukturierung des Stempels oder des Negativstempels auf einer Struktur basieren, die mittels Interferenz von zumindest zwei Laserstrahlen erzeugt wird. Eine derartige Strukturierung wird im Kontext der vorliegenden Erfindung auch als "Laserinterferenzstrukturierung" bezeichnet.

Beispielhaft wird in diesem Zusammenhang auf die DE 10 2012 011 343 A1 verwiesen, deren technische Lehre durch diese Bezugnahme vollständig zur Offenbarung der vorliegenden Anmeldung hinzugefügt wird. Die DE 10 2012 011 343 A1 offenbart sowohl ein Verfahren zur direkten Laserinterferenzstrukturierung als auch ein indirekt arbeitendes Verfahren.

Zur Laserinterferenzstrukturierung hat sich insbesondere die Verwendung von gepulster Laserstrahlung bewährt. Zu besonders geeigneten Wellenlängen, Pulsdauern, Pulsrepetitionsraten sowie Pulsenergien wird nochmals auf die Offenbarung der DE 10 2012 011 343 A1 verweisen, die dort offenbarten Wertebereiche gehören ebenfalls zur Offenbarung der vorliegenden Anmeldung.

Überraschend hat sich gezeigt, dass auch eine durch Prägung des Schildrohlings mit direkt laserinterferenzstrukturiertem Stempel z.B. gemäß der Lehre DE 10 2012 011 343 A1 die in der Oberfläche des Schildrohlings erzeugte (Negativ)Struktur farbig erscheint. Auch eine auf diese Weise erzeugte (Negativ)Struktur kann somit als erfindungsgemäße Sicherheitsstruktur verwendet werden.

Gemäß dem erfindungsgemäßen Verfahren wird die optisch wahrnehmbare Sicherheitsstruktur mittels direkter Laserstrukturierung in die vorderseitige Oberfläche des Schildrohlings eingebracht, die auf der Interferenz von zumindest zwei Laserstrahlen auf / in der Oberfläche des Schildrohlings basiert.

Ein entsprechendes Verfahren, welches sich insbesondere zur direkten Laserinterferenzstrukturierung von Schildrohlingen mit einer erfindungsgemäßen Sicherheitsstruktur eignet, ist beispielsweise wiederum aus der DE 10 2012 011 343 A1 bekannt. Das dort offenbarte Verfahren ist aufgrund seiner hohen Ausführungsgeschwindigkeit auch bei der Erzeugung großflächiger Strukturen für eine Integration in ein Verfahren zur Herstellung von Kfz-Kennzeichenschildern geeignet. Mit dem Verfahren lassen sich insbesondere auch großflächige Strukturen erzeugen, insbesondere dann, wenn ein bewegtes Objekt wie z.B. ein Schildrohling in einer Produktionsstraße strukturiert werden soll.

In einer besonders vorteilhaften Weiterbildung des erfindungsgemäßen Verfahrens werden zwei separate Sicherheitsstrukturen in den Schildrohling eingebracht. Eine erste Struktur, die insbesondere großflächig sein kann, wird mittels mechanischen Prägens in die Oberfläche des Schildrohlings eingebracht. Da diese Struktur auf einem Prägestempel basiert, kann sie nicht ohne erheblichen Aufwand von Schildrohling zu Schildrohling variiert werden, vielmehr wird sie über eine größere Zahl von Schildrohlingen (d.h. einige zig bis einige zehntausend) konstant gehalten werden. Eine zweite Struktur wird hingegen mittels Laserstrukturierung erzeugt. Insbesondere wenn hierzu Gebrauch gemacht wird von dem aus der DE 10 2012 011 343 A1 bekannten Verfahren zur direkten Laserinterferenzstrukturierung kann hier die eingebrachte Sicherheitsstruktur von Schildrohling zur Schildrohling variiert werden. Dies lässt z.B. die Anbringung einer individuellen Nummerierung der hergestellten Schildrohlinge zu, oder einer individuellen Kennzeichnung, welche z.B. das Herstelldatum, den Herstellzeitpunkt, die verwendete Maschine, den Bediener der Maschine, etc. codiert.

Es hat sich sowohl bei der direkten Laserinterferenzstrukturierung von Schildrohlingen als auch bei der direkten oder indirekten Laserinterferenzstrukturierung von Stempeln jeweils mittels zumindest zweier Laserstrahlen als vorteilhaft erwiesen, wenn die Laserstrahlen jeweils einen linienhaften Fokus aufweisen und sich die Foki der Laserstrahlen auf bzw. in der Oberfläche des Stempels bzw. der vorderseitigen Oberfläche des Schildrohlings überlagern.

Weiterhin hat es sich als vorteilhaft erwiesen, wenn bei der Laserinterferenzstrukturierung von Stempel bzw. Schildrohling mittels zumindest zweier sich überlagernder Laserstrahlen der Stempel bzw. der Schildrohling und der Auftreffpunkt der Laserstrahlen auf dem Stempel bzw. dem Schildrohling senkrecht zur Ausdehnungsrichtung der Foki relativ zueinander bewegt werden. Hierzu kann insbesondere vorgesehen werden, den Schildrohling bzw. den Stempel zu bewegen. Insbesondere kann hier bei der Laserinterferenzstrukturierung der Schildrohlingen Gebrauch gemacht werden von einer ggf. vorliegenden linearen Bewegung der Schildrohlinge während ihrer Herstellung auf einer entsprechenden Produktionsanlage.

In einer vorteilhaften Weiterbildung des Verfahrens zur Laserinterferenzstrukturierung von Stempel oder Schildrohling zur Ausbildung der optisch wahrnehmbaren, flächenhaft ausgedehnten Sicherheitsstruktur wird eine Maske auf die Oberfläche des Stempels bzw. des Schildrohlings abgebildet. Diese Maske ist für die zur Laserinterferenzstrukturierung verwendete Laserstrahlung im Wesentlichen undurchlässig. Sie kann insbesondere auf einem metallischen Werkstoff basieren. Insbesondere hat sich die Verwendung von Masken bewährt, die als strukturierte metallische Schichten ausgebildet sind, die sowohl freitragend in Form einer Folie ausgebildet sein als auch von einem optisch transparenten Träger wie einem Glassubstrat getragen werden können.

In einer besonders bevorzugten Weiterbildung des erfindungsgemäßen Verfahrens umfasst die optisch wahrnehmbare Sicherheitsstruktur eine Mehrzahl diskreter Oberflächenbereiche, die - unter einem festen Winkel betrachtet - zumindest zwei verschiedene Farbeffekte aufweisen. Verschiedene Farbeffekte lassen sich durch z.B. Variation der charakteristischen Abmessungen der regelmäßen Strukturen wie z.B. des dominanten Strukturabstands erzielen.

Insbesondere ist es auf diese Weise möglich, eine Sicherheitsstruktur, die die Form eines Symbols, eines Logos, etc. aufweist, in einzelne Pixel aufzulösen und auf diese Weise das Symbol bzw. das Logo zumindest zweifarbig dazustehen.

Darüber hinaus ist es möglich, die Zahl der verschiedenen Farbeffekte weiter zu erhöhen, um die Farbtiefe der erzeugten Sicherheitsstruktur, insbesondere also des dargestellten Symbols oder Logos zu erhöhen.

Hierzu können z.B. acht oder sechzehn formidentische, regelmäßige Strukturen wie z.B. Kreise, Rechtecke, Sechs- oder Achtecke etc. verwendet werden, die sich nur in ihren dominanten Strukturgrößen unterschieden. Auf diese Weise kann eine Farbtiefe von 8 bzw. 16 Bit erzielt werden.

Ein noch größeres Farbspektrum kann erschlossen werden, wenn jeder für das Auge eines menschlichen Betrachters sichtbare Bildpunkt aus drei oder mehr formidentischen, regelmäßigen Strukturen zusammengesetzt wird, die sich nur in ihren dominanten Strukturgrößen unterschieden und auf diese Weise - wiederum unter einem festen Winkel betrachtet - drei oder mehr verschiedene Farbeindrücke erzeugen. Aus der Überlagerung dieser drei Grundfarben lässt sich für das menschliche Auge das gesamte sichtbare Farbspektrum erzeugen. Insbesondere bieten sich hier die Farben rot, grün und blau an (RGB-Farbsystem). Ab auch andere Farbsysteme wie CYMK können verwendet werden. Es muss jedoch beachtet werden, dass die zur Bilderzeugung verwendeten Pixel tatsächlich nur unter einem vorgegebenen Betrachtungswinkel in den angegebenen Farben erscheinen.

Das erfindungsgemäße Verfahren erlaubt es insbesondere, die mit der Anbringung der aus dem Stand der Technik vorbekannten Hologrammsiegel verbundenen Nachteile zu vermeiden. So fällt kein Abfall an, der entsorgt werden muss, und es werden keine potentiell gesundheitsrelevanten Stoffe z.B. aus einem erhitzten Heißkleber frei. Auch ist der Platzbedarf zumindest bei einer mechanischen Prägung der erfindungsgemäßen Sicherheitsstruktur minimal, so dass das Prägeverfahren ohne weiteres in bestehende Produktionsanlagen für die Herstellung von Schildrohlingen integriert werden kann.

Ein Kfz-Kennzeichenschild weist einen flächenhaft ausgedehnten Schildrohling auf. Bezüglich möglicher Eigenschaften des Schildrohlings sowie des Kfz-Kennzeichenschilds wird auf die vorstehenden Ausführungen zum erfindungsgemäßen Verfahren verwiesen, die unmittelbar auf Kfz-Kennzeichenschilder übertragen werden können. Dies gilt insbesondere, da das erfindungsgemäße Verfahren zur Herstellung eines Kfz-Kennzeichenschilds geeignet und eingerichtet ist.

Erfindungsgemäß ist nun in die vorderseitige Oberfläche des Schildrohlings eine optisch wahrnehmbare, flächenhaft ausgedehnte Sicherheitsstruktur eingebracht, die einen auf optischer Interferenz beruhenden Farbeffekt zeigt. Dieser Farbeffekt beruht auf flächenhaft ausgedehnten, regelmäßigen, erhabenen oder vertieften Strukturen in der Oberfläche des Schildrohlings.

Im gebrauchsfertigen Zustand weist das Kfz-Kennzeichenschild in der Regel eine individuelle Kennzeichenlegende auf.

In einer vorteilhaften Ausgestaltung weist der Schildrohling weiterhin retroreflektierende Eigenschaften auf. In einer bevorzugten Weiterbildung basiert diese auf in das Material des Schildrohlings eingebettete bzw. von diesem ausgebildete (Mikro)prismatischen Elementen.

In einer weiteren vorteilhaften Ausgestaltung weist der Schildrohling ein zusätzliches, optisch wahrnehmbares Sicherheitsmerkmal auf, welches in das Material des Schildrohlings eingebettet ist. In diesem Zusammenhang wird beispielhaft nochmals auf die vorstehend bereits erwähnten retroreflektierenden Folien mit eingebetteten Mikrolinsen verwiesen, die von der Fa. 3M angeboten werden und in die optisch wahrnehmbare Sicherheitsmerkmale des Typs Ensure™ Image und Ensure™ Virtual Security Thread eingebracht sind.

In einer vorteilhaften Weiterbildung des Kfz-Kennzeichen-schilds ist die optisch wahrnehmbare Sicherheitsstruktur in einem Bereich des Kfz-Kennzeichenschilds angeordnet, in dem der Schildrohling retroreflektierende Eigenschaften aufweist.

Diese Weiterbildung des Kfz-Kennzeichenschilds kann darüber hinaus noch vorteilhaft weitergebildet werden, indem die erfindungsgemäße Sicherheitsstruktur so ausgebildet ist, dass das Kfz-Kennzeichenschild auch in dem Bereich retroreflektierende Eigenschaften aufweist, in dem die optisch wahrnehmbare Sicherheitsstruktur angeordnet ist. Hierzu muss die erfindungsgemäße Sicherheitsstruktur grundsätzlich zumindest eine gewisse Transparenz aufweisen. Es ist ein besonderer Vorteil der erfindungsgemäßen Sicherheitsstruktur, welche einen auf optischer Interferenz beruhenden Farbeffekt zeigt, der auf flächenhaft ausgedehnten, regelmäßigen, erhabenen oder vertieften Strukturen in der Oberfläche des Schildrohlings beruht, dass diese, wenn sie in oder auf transparenten Oberflächen ausgebildet wird, in der Regel bereits ohne weitere Maßnahmen ein gewisses Maß an Transparenz aufweisen.

In einer weiteren vorteilhaften Weiterbildung des Kfz-Kennzeichenschilds ist die optisch wahrnehmbare Sicherheitsstruktur in einem Bereich des Kfz-Kennzeichenschilds angeordnet, unterhalb dessen das zusätzliche, in das Material des Schildrohlings eingebettete, optisch wahrnehmbare Sicherheitsmerkmal angeordnet ist.

Auch hier ist es wieder von besonderem Vorteil, wenn das in das Material des Schildrohlings eingebettete, optisch wahrnehmbare zusätzliche Sicherheitsmerkmal durch die optisch wahrnehmbare Sicherheitsstruktur hindurch erkennbar ist, die in die vorderseitige Oberfläche des Schildrohlings eingebracht ist.

In einer vorteilhaften Ausgestaltung des Kfz-Kennzeichenschilds ist die vorderseitige Oberfläche des Schildrohlings mechanisch prägbar, insbesondere heißprägbar. In dieser Ausgestaltung kann die Sicherheitsstruktur besonders einfach mittels mechanischen Prägens des Schildrohlings mit einem geeignet strukturierten Stempel erzeugt werden.

In einer besonders bevorzugten Ausgestaltung weist das Kfz-Kennzeichenschild eine Schildplatine auf, auf deren Vorderfläche eine Folie mit einer transparenten Deckschicht auflaminiert ist. Diese Folie kann insbesondere retroreflektierende Eigenschaften haben. Die Schildplatine kann z.B. aus einem Metall wie Aluminium oder auch aus einem Kunststoff gefertigt sein.

In einer weiteren besonders bevorzugten Ausgestaltung des Kfz-Kennzeichenschilds weist die optisch wahrnehmbare Sicherheitsstruktur eine Mehrzahl diskreter Oberflächenbereiche auf, die zumindest zwei verschiedene Farbeffekte aufweisen. Insbesondere ist es auf diese Weise möglich, eine Sicherheitsstruktur, die die Form eines Symbols, eines Logos, etc. aufweist, in einzelne Pixel aufzulösen und auf diese Weise das Symbol bzw. das Logo zumindest zweifarbig dazustehen.

Schließlich betrifft die vorliegende Erfindung auch eine Vorrichtung zur Herstellung eines Kfz-Kennzeichenschilds. Erfindungsgemäß weist die Vorrichtung die folgenden Merkmale auf:
a) eine Rohlingszuführung zur Bereitstellung eines Schildrohlings, und
b) eine Strukturierungseinheit, die dazu eingerichtet ist, eine optisch wahrnehmbare, flächenhaft ausgedehnte Sicherheitsstruktur in die vorderseitige Oberfläche des Schildrohlings einzubringen, wobei die eingebrachte Sicherheitsstruktur einen auf optischer Interferenz beruhenden Farbeffekt zeigt, die auf regelmäßigen, erhabenen oder vertieften Strukturen in der Oberfläche des Schildrohlings beruht.

Auch im Zusammenhang mit der erfindungsgemäßen Vorrichtung wird auf die vorstehenden Ausführungen verwiesen, die sich auf erfindungsgemäße Verfahren bzw. Kfz-Kennzeichenschilder beziehen. Die dortigen Ausführungen lassen sich unmittelbar auf die erfindungsgemäße Vorrichtung übertragen. Dies gilt insbesondere, da eine erfindungsgemäße Vorrichtung zur Ausführung des erfindungsgemäßen Verfahrens geeignet und eingerichtet ist.

In einer bevorzugten Ausgestaltung der erfindungsgemäßen Vorrichtung ist die Strukturierungseinheit dazu eingerichtet, eine optisch wahrnehmbare Sicherheitsstruktur zu erzeugen, die eine Mehrzahl diskreter Oberflächenbereiche umfasst, welche zumindest zwei verschiedene Farbeffekte aufweisen. Verschiedene Farbeffekte lassen sich durch z.B. Variation der charakteristischen Abmessungen der regelmäßen Strukturen wie z.B. des dominanten Strukturabstands erzielen.

In einer weiteren vorteilhaften Weiterbildung weist die Rohlingszuführung weiterhin folgendes auf:
a) eine Platinenzuführung zur Bereitstellung einer Schildplatine,
b) eine Folienzuführung zur Bereitstellung einer Folie mit einer transparenten Deckschicht,
c) eine Laminierstation zum Auflaminieren der Folie auf die Schildplatine.

Insbesondere kann die Platinenzuführung eine Bandzuführung aufweisen, mit der ein auf einer Vorratsrolle aufgespultes metallisches Endlosband zugeführt wird. Aus diesem Endlosband werden dann im Produktionsprozess einzelne Schildplatinen herausgelöst, z.B. mittels Stanzen. Im Kontext der vorliegenden Erfindung soll auch die Zuführung eines metallischen Bandes, aus dem im Produktionsprozess nachfolgend einzelne Schildplatinen herausgelöst werden, als "Bereitstellung einer Schildplatine" verstanden werden.

In einer nicht erfindungsgemäßen Ausgestaltung der Vorrichtung umfasst die Strukturierungseinheit einen strukturierten Stempel und ist dazu eingerichtet, die optisch wahrnehmbare Sicherheitsstruktur mittels mechanischem Prägen, insbesondere mittels Heißprägen, vom strukturierten Stempel in die Oberfläche des Schildrohlings zu übertragen. Hierzu umfasst die Vorrichtung vorteilhaft zusätzlich eine mechanische Prägeeinheit.

Die Prägeeinheit kann vorteilhaft so ausgebildet sein, dass der Prägestempel beheizbar ist. Weiterhin kann die Prägeeinheit so ausgebildet sein, dass eine Heizeinrichtung vorgesehen ist, die eine zumindest lokale Erwärmung eines zu prägenden Schildrohlings erlaubt.

Gemäß der erfindungsgemäßen Vorrichtung umfasst die Strukturierungseinheit einen Laser und ist dazu eingerichtet, die optisch wahrnehmbare Sicherheitsstruktur mittels Interferenz von zumindest zwei Laserstrahlen in die Oberfläche des Schildrohlings einzubringen.

Als besonders vorteilhaft hat es sich in einem solchen Fall erwiesen, wenn die Strukturierungseinheit so eingerichtet ist, dass die Laserstrahlen jeweils einen linienhaften Fokus aufweisen und sich die Foki auf bzw. in der Oberfläche des zu strukturierenden Schildrohlings überlagern.

Eine besonders hohe Gestaltungsfreiheit bezüglich der mittels direkter Laserinterferenzstrukturierung mit zumindest zwei Strahlen eingebrachten Sicherheitsstruktur lässt sich erzielen, wenn die Vorrichtung so eingerichtet ist, dass sich der der zu strukturierende Schildrohling und der Auftreffpunkt der Laserstrahlen auf dem Schildrohling senkrecht zur Ausdehnungsrichtung der Foki relativ zueinander bewegt werden. Hierzu kann beispielsweise eine in die Vorrichtung integrierte Schildrohling-Transportvorrichtung vorgesehen sein, die insbesondere auch den Transport der Schildrohlinge bei der Ausführung des erfindungsgemäßen Herstellungsverfahrens bewerkstelligt.

Weitere Vorteile und Merkmale des erfindungsgemäßen Verfahrens, sowie der erfindungsgemäßen Vorrichtung ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche soweit sie technisch möglich sind, auch wenn sich die Unteransprüche nicht aufeinander beziehen oder wenn diese verschiedenen Anspruchskategorien zugehören.

Weitere Vorteile und Merkmale ergeben sich weiterhin aus den nachstehend wiedergegebenen Ausführungsbeispielen, die dazu vorgesehen sind, dem Fachmann die Erfindung näher zu erläutern, ohne deren Umfang beschränken zu wollen. Die Ausführungsbeispiele werden anhand der beigefügten Zeichnungen erläutert. In dieser zeigen:
- Fig. 1:: einen Schildrohling gemäß Stand der Technik in Seitenansicht,
- Fig. 2:: den Schildrohling gemäß Figur 1 in Aufsicht,
- Fig. 3:: einen erfindungsgemäßen Schildrohling für ein Kfz-Kennzeichenschild in Aufsicht,
- Fig. 4:: eine erfindungsgemäße Sicherheitsstruktur in Aufsicht mit Teilvergrößerung,
- Fig. 5:: ein erfindungsgemäßes Kfz-Kennzeichenschild in Aufsicht,
- Fig. 6:: ein Ausführungsbeispiel für eine nicht erfindungsgemäße Herstellvorrichtung in schematischer Darstellung, und
- Fig. 7:: eine erfindungsgemäße Herstellvorrichtung in schematischer Darstellung.

In den nachfolgenden Figuren sind identische technische Merkmale mit denselben Bezugszeichen bezeichnet.

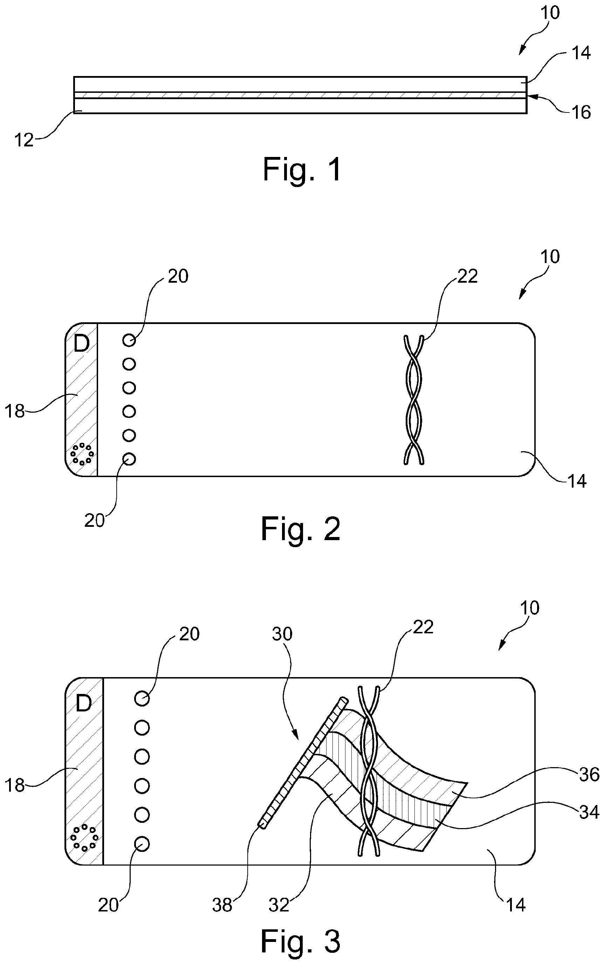

Fig. 1 zeigt einen Schildrohling 10 gemäß Stand der Technik in Seitenansicht. Der Schildrohling 10 umfasst eine metallische Schildplatine 12 aus Aluminiumblech, auf deren Vorderseite eine retroreflektierende Folie 14 aufkaschiert ist. Hierzu ist die retroreflektierende Folie 14 rückseitig mit einer druckaktivierbaren Kleberschicht 16 versehen, die in Fig. 1 ebenfalls schematisch angedeutet ist. Die retroreflektierende Folie 14 basiert auf in ein transparentes Kunststoffmaterial eingebetteten Mikrolinsen (nicht gezeigt), die in einer zur Erstreckungsrichtung der Folie parallelen Ebene im Material der Folie 14 angeordnet sind. Hinter der Ebene der Mikrolinsen und von den Mikrolinsen in einem im Wesentlichen konstanten Abstand ist eine metallische Reflexionsschicht (nicht gezeigt) angeordnet. Die Mikrolinsen in Zusammenwirkung mit der metallischen Reflexionsschicht bewirken die retroreflektierenden Eigenschaften der Folie 14. Die Mikrolinsen sind mit einer transparenten Deckschicht überschichtet (nicht gezeigt), die aus einem transparenten Kunststoff besteht, der einen hohen Anteil von PVC enthält, zum Heißprägen geeignet und mechanisch gut prägbar ist.

Fig. 2 zeigt den Schildrohling aus Fig. 1 in Aufsicht. Die auf die Schildplatine 12 aufkaschierte retroreflektierende Folie 14 weist einerseits farbig bedruckte Bereiche 18 auf, die bereits bei der Herstellung der Folie 14 vom Folienhersteller aufgebracht werden. In einem alternativen Herstellungsverfahren werden diese farbigen Bereiche beim Hersteller des Schildrohlings 10 auf die mit der retroreflektierenden Folie 14 kaschierten Schildplatinen 12 aufgedruckt, bevorzugt mittels eines Thermotransferverfahrens. Im gezeigten Ausführungsbeispiel handelt es sich bei den bedruckten Bereichen um ein an der linken Seite des Schildrohlings angeordnetes blaues Band, in dem einerseits ein Länderkürzel und andererseits das Hoheitssymbol der Europäischen Union angeordnet sind.

Die Folie 14 weist in das Material der Folie 14 eingebettete, optisch wahrnehmbare erste und zweite zusätzliche Sicherheitsmerkmale 20, 22 auf. Bei dem ersten zusätzlichen Sicherheitsmerkmal 20, welches mehrfach in das Material der Folie eingebettet ist, handelt es sich um ein Sicherheitsmerkmal vom Typ Ensure™ Image der Fa. 3M. Bei dem zweiten zusätzlichen Sicherheitsmerkmal 22 handelt es sich um ein Sicherheitsmerkmal vom Typ Ensure™ Virtual Security Thread der Fa. 3M.

Fig. 3 zeigt einen erfindungsgemäßen Schildrohling 10 für ein Kfz-Kennzeichenschild in Aufsicht. Der erfindungsgemäße Schildrohling gemäß Fig. 3 unterscheidet sich vom Schildrohling gemäß Fig. 2 durch die in die oberseitige Oberfläche des Schildrohlings 10 eingebrachte erfindungsgemäße Sicherheitsstruktur 30. Die Sicherheitsstruktur 30 ist in der Oberfläche der transparenten Deckschicht der Folie 14 ausgebildet, die die Schicht der Mikrolinsen überdeckt, d.h. im sogenannten "Top Coat". Die gezeigte Sicherheitsstruktur 30 ist flächenhaft ausgedehnt und bildet im gezeigten Ausführungsbeispiel eine Flagge aus. Die Sicherheitsstruktur 30 ist optisch wahrnehmbar, wenn ein Betrachter die vorderseitige Oberfläche des Schildrohlings 10 unter einem vorbestimmten Betrachtungswinkel von z.B. 30° gegen die Flächennormale des Schildrohlings 10 betrachtet. Bei senkrechter Draufsicht auf den Schildrohling 10 ist die Sicherheitsstruktur 30 hingegen praktisch unsichtbar, insoweit ist die Darstellung in Fig. 3 nur symbolisch zu verstehen.

Die Sicherheitsstruktur 30 weist vier verschiedene Bereiche 32, 34, 36, 38 auf, die unter demselben Betrachtungswinkel betrachtet jeweils verschiedene Farbeindrücke beim Betrachter hervorrufen. Diese Farbeffekte der Sicherheitsstruktur 30 beruhen auf optischer Interferenz, die auf flächenhaft ausgedehnten, regelmäßigen, erhabenen oder vertieften Mikrostrukturen in der Oberfläche des Schildrohlings 10 beruht.

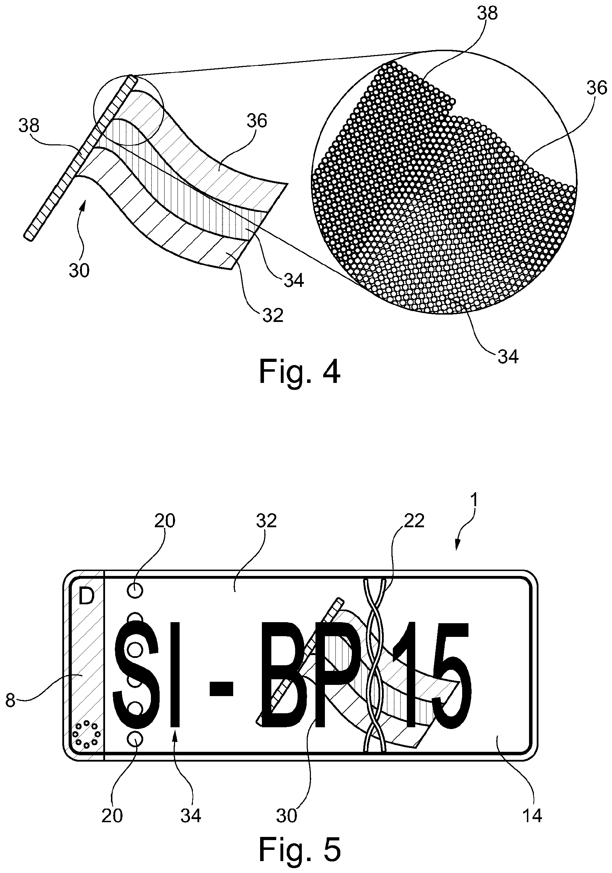

Dies ist in Fig. 4 nochmals im Detail dargestellt. Jeder der vier Bereiche 32, 34, 36, 38 umfasst eine Vielzahl voneinander getrennter Oberflächenbereiche ("Pixel"), die innerhalb eines Bereichs 32, 34, 36, 38 jeweils identisch mikrostrukturiert sind, so dass sie den gleichen Farbeindruck beim Betrachter hervorrufen. So kann die Mikrostrukturierung des Bereichs 32 unter einem gegebenen Betrachtungswinkel beispielsweise einen gelben Farbeindruck hervorrufen, die Mikrostrukturierung des Bereichs 34 unter demselben Betrachtungswinkel beispielsweise einen roten Farbeindruck, die Mikrostrukturierung des Bereichs 36 unter demselben Betrachtungswinkel beispielsweise einen annähernd schwarzen Farbeindruck und die Mikrostrukturierung des Bereichs 38 unter demselben Betrachtungswinkel beispielsweise einen braunen Farbeindruck.

In einer alternativen Ausgestaltung, die hier nicht dargestellt ist, sind die vier Bereiche 32, 34, 36, 38 jeweils einheitlich nano-/mikrostrukturiert, so dass jeweils ein eigener Farbeindruck entsteht. Auf eine Zerlegung jedes einzelnen Bereichs 32, 34, 36, 38 in einzelne, jeweils identisch strukturierte Pixel wurde verzichtet. Dies hat zur Folge, dass eine solche Sicherheitsstruktur deutlich einfacher herzustellen ist.

In beiden Ausgestaltungen der vier Bereiche 32, 34, 36, 38 gilt, dass bei senkrechter Aufsicht auf den erfindungsgemäßen Schildrohling 10 die Sicherheitsstruktur 30 praktisch unsichtbar ist. Insbesondere ist die Retroreflektivität des Kennzeichenschilds in diesen Bereichen 32, 34, 36, 38 praktisch nicht vermindert. Darüber hinaus sind optisch wahrnehmbare Strukturen, die in das Material der Folie 14 eingebettet sind, weiterhin unter senkrechter Draufsicht gut erkennbar.

Dies ist auch in Fig. 3 schematisch dargestellt, in der die Sicherheitsstruktur 30 in einem Bereich angeordnet ist, in dem im Material der Folie 14 ein zweites zusätzliches Sicherheitsmerkmal 22 ausgebildet ist. Da die Sicherheitsstruktur 30 bei senkrechter Aufsicht auf den erfindungsgemäßen Schildrohling 210 praktisch unsichtbar ist, bleibt auch das zweite zusätzliche Sicherheitsmerkmal 22 einer optischen Inspektion bzw. Verifikation zugänglich. Dies stellt einen wesentlichen Vorteil des erfindungsgemäßen Schildrohlings 10 bzw. eines damit hergestellten Kfz-Kennzeichenschilds 1 dar.

Weiterhin bleiben die retroreflektierenden Eigenschaften des Schildrohlings 10 auch in den Bereichen erhalten, in denen die Sicherheitsstruktur in die Oberfläche des Schildrohlings 10 eingebracht ist. Dies stellt einen weiteren wesentlichen Vorteil des erfindungsgemäßen Schildrohlings 10 bzw. eines damit hergestellten Kfz-Kennzeichenschilds 1 dar.

In Fig. 5 ist ein gebrauchsfertiges erfindungsgemäßes Kfz-Kennzeichenschild 1 in Aufsicht dargestellt. Es basiert auf dem Schildrohling gemäß Fig. 3, der in einem nachfolgenden Bearbeitungsschritt mit einem umlaufenden erhabenen Rand 32 und einer individuellen Kennzeichenlegende 34 versehen wurde. Sowohl der Rand 32 als auch die Zeichen der Kennzeichenlegende 34 sind erhaben ausgeführt und mittels mechanischem Prägen des Schildrohlings 10 erzeugt. Nach dem Prägen sind die erhaben geprägten Bereiche des Kfz-Kennzeichenschilds 1, d.h. der umlaufende Rand 32 sowie die Kennzeichenlegende 34, dauerhaft schwarz eingefärbt worden mittels eines Farbübertrags von einer Farbtransferfolie in einem Thermotransferverfahren.

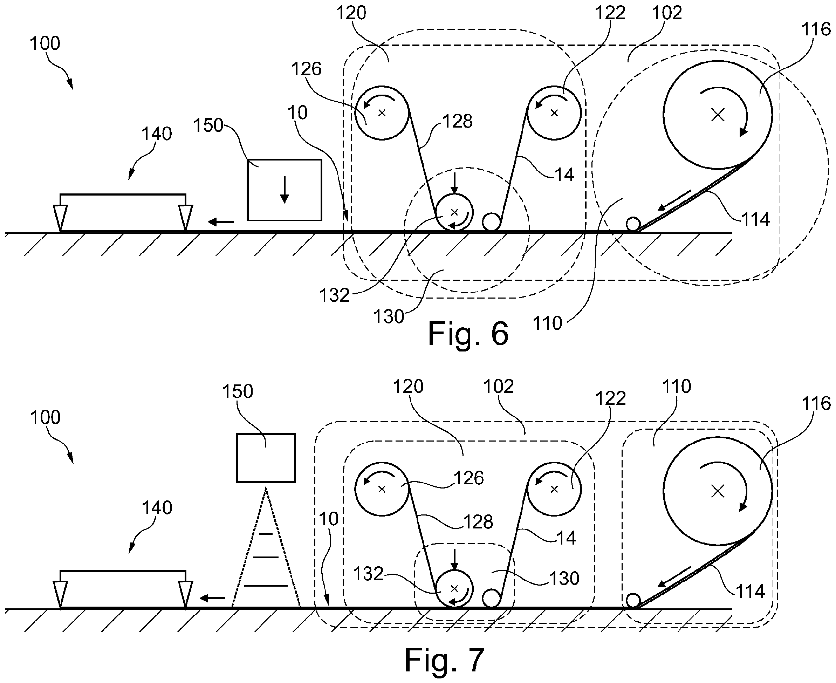

Fig. 6 zeigt ein Ausführungsbeispiel für eine Herstellvorrichtung 100 in schematischer Darstellung. Die Vorrichtung 100 ist zur Herstellung eines Kfz-Kennzeichenschilds 1 vorgesehen und eingerichtet. Sie umfasst eine Rohlingszuführung 102 zur Bereitstellung eines Schildrohlings 10.

In der gezeigten Ausgestaltung besteht der Rohling 10 aus einem (noch nicht vereinzelten) Abschnitt eines endlosen Aluminiumbands 114, welches von einer Vorratsrolle 116 abgespult wird. Diese Aufgaben werden von der Funktionseinheit der Platinenzuführung 110 ausgeführt.

Weiterhin umfasst die Vorrichtung 100 eine Folienzuführung 120 zur Bereitstellung einer Folie 14, z.B. einer retroreflektierenden Folie mit einer transparenten Deckschicht wie im Zusammenhang mit Fig. 1 und 2 erläutert. Die Folienzuführung 120 umfasst eine Vorratsspule 122, auf der ein Vorrat der beschriebenen Folie 14 als Endlosband aufgespult ist. Der Folienaufbau entspricht dem in Zusammenhang mit Fig. 1 beschriebenen Aufbau. Von dieser Vorratsspule 122 wird die auf die Schildplatine aufzukaschierende Folie 14 abgespult und einer Laminierstation 130 zugeführt, in der die Folie 14 auf das der Laminierstation 130 ebenfalls zugeführte endlose Metallband 114 auflaminiert wird. Hierzu wird ein die Kleberschicht 16 abdeckender Papierliner 128 von der Folie 14 abgezogen und auf einer Aufnahmerolle 126 aufgespult.

In der Laminierstation 130 wird weiterhin die Kleberschicht der Folie 14 mit dem Metallband 114 in Kontakt gebracht. Eine in der Laminierstation 130 angeordnete (ggf. beheizte) Andruckrolle 132 beaufschlagt die Folie 14 mit einem definierten Anpressdruck und sorgt so für eine Aktivierung der Kleberschicht. Stromabwärts der Laminierstation 130 ist eine Stanzeinheit 140 angeordnet, welche aus dem metallischen Band 114, welches mit der retroreflektierenden Folie 14 kaschiert ist, einzelne Kennzeichenschildrohlinge 10 ausstanzt, die dann einer weiteren Verarbeitung zugeführt werden.

Im Ausführungsbeispiel gemäß Figur 6 ist zwischen der der Platinenzuführung 110 zugeordneten Laminierstation 130 und der Stanzeinheit 140 eine mechanische Strukturierungseinheit 150 in Form einer Heißprägestation angeordnet. Diese ist dazu eingerichtet, eine optisch wahrnehmbare, flächenhaft ausgedehnte Sicherheitsstruktur 30 in die vorderseitige Oberfläche des Schildrohlings 10 einzubringen, genauer in den Top Coat der auf die Schildplatine 12 aufkaschierten retroreflektierenden Folie 14. Dabei zeigt die eingebrachte Sicherheitsstruktur 30 einen auf optischer Interferenz beruhenden Farbeffekt, die auf regelmäßigen, erhabenen oder vertieften Strukturen in der Oberfläche des Schildrohlings 10 beruht.

In dem in Fig. 7 dargestellten Ausführungsbeispiel einer erfindungsgemäßen Herstellvorrichtung 100 ist die Strukturierungseinheit 150 dazu eingerichtet, eine optisch wahrnehmbare Sicherheitsstruktur 30 zu erzeugen, die eine Mehrzahl diskreter Oberflächenbereiche umfasst, welche zumindest zwei verschiedene Farbeffekte aufweisen. Diese verschiedenen Farbeffekte werden durch z.B. Variation der charakteristischen Abmessungen der regelmäßen Strukturen wie z.B. des dominanten Strukturabstands erzielt.

Im Ausführungsbeispiel gemäß Fig. 6 der Vorrichtung 100 umfasst die Strukturierungseinheit 150 einen strukturierten metallischen Stempel (nicht dargestellt) und ist dazu eingerichtet, die optisch wahrnehmbare Sicherheitsstruktur 10 mittels mechanischem Heißprägen der retroreflektierenden Folie 14 vom strukturierten Stempel in die Oberfläche des Top Coats der Folie 14 und damit des Schildrohlings 10 zu übertragen.

Hierzu ist die Strukturierungseinheit 150 so ausgebildet, dass der Prägestempel beheizbar ist, so dass er z.B. auf eine Temperatur von über 70°C erwärmt werden kann, insbesondere zwischen 120°C und 160°C, bevorzugt auf 150°C. Weiterhin ist die Strukturierungseinheit 150 mit einer zusätzlichen Platinenheizung ausgerüstet (nicht dargestellt), die eine lokale Erwärmung eines zu prägenden Schildrohlings 10 in dem Bereich erlaubt, in dem die Sicherheitsstruktur 30 in die Oberfläche des Schildrohlings 10 mechanisch eingeprägt werden soll.

Der metallische Prägestempel seinerseits ist mit einem Negativ der in die Oberfläche des Schildrohlings 10 einzubringenden Sicherheitsstruktur 30 versehen, die in die Oberfläche des Schildrohlings 10 abgeformt werden soll. Im gezeigten Ausführungsbeispiel wurde die Strukturierung des Prägestempels mittels direkter Laserinterferenzstrukturierung erzeugt, d.h. die Strukturierung des Prägestempels basiert auf einer Struktur, die mittels Interferenz von zumindest zwei Laserstrahlen erzeugt wurde. Hierzu weisen die beiden Laserstrahlen, die z.B. mittels Strahlteilung eines von einem Laser erzeugten Laserstrahls erzeugt werden können, jeweils einen linienhaften Fokus auf. Diese Teilstrahlen werden so geführt, dass sich die Foki auf bzw. in der Oberfläche des zuvor hochglanzpolierten Stempels, der aus Edelstahl gefertigt ist, überlagern. Auch hier ist zur Ausbildung komplexerer zweidimensionaler Strukturen auf dem Prägestempel vorgesehen, dass bei der Laserinterferenzstrukturierung des Prägestempels der Stempel und der Auftreffpunkt der Laserstrahlen auf dem Stempel senkrecht zur Ausdehnungsrichtung der Foki kontrolliert relativ zueinander bewegt werden. Weiterhin ist vorgesehen, dass zur Ausbildung des Negativs zur optisch wahrnehmbaren, flächenhaft ausgedehnten Sicherheitsstruktur auf dem Prägestempel eine optische Maske auf die Oberfläche des Stempels abgebildet wird.

Fig. 7 zeigt ein Ausführungsbeispiel einer erfindungsgemäßen Herstellvorrichtung 100 wiederum in schematischer Darstellung. Die Herstellvorrichtung 100 gemäß des zweiten Ausführungsbeispiels stimmt in allen Merkmalen mit der Herstellvorrichtung gemäß des ersten Ausführungsbeispiels nach Fig. 6 überein mit Ausnahme der Strukturierungseinheit 150, die in diesem zweiten Ausführungsbeispiel nicht mechanisch, sondern laserbasiert und damit berührungslos arbeitet. Hierzu umfasst die Strukturierungseinheit 150 einen Laser (nicht dargestellt) und ist dazu eingerichtet, die optisch wahrnehmbare Sicherheitsstruktur 30 mittels Interferenz von zumindest zwei Laserstrahlen in die Oberfläche des Schildrohlings 10 einzubringen. Hierzu ist die Strukturierungseinheit 150 so eingerichtet, dass die Laserstrahlen jeweils einen linienhaften Fokus aufweisen und sich die Foki auf bzw. in der Oberfläche des zu strukturierenden Schildrohlings 10 überlagern.

Die Strukturierungseinheit 150 wirkt mit der Steuerung des Vortriebs der Platinenzuführung 110 zusammen, so dass der zu strukturierende Schildrohling 10 und der Auftreffpunkt der Laserstrahlen auf dem Schildrohling 10 senkrecht zur Ausdehnungsrichtung der Foki kontrolliert relativ zueinander bewegt werden. Hierdurch kann eine hohe Gestaltungsvielfalt der erzeugten Sicherheitsstruktur 30 erzielt werden.

Weiterhin ist die laserbasiert arbeitende Strukturierungseinheit 150 dazu eingerichtet, zur Ausbildung der optisch wahrnehmbaren, flächenhaft ausgedehnten Sicherheitsstruktur in der Oberfläche des Schildrohlings 10 eine optische Maske auf die Oberfläche des Schildrohlings 10 abzubilden.

**Bezugszeichen**

| | | | |
|---|---|---|---|
| 1 | Kfz-Kennzeichenschild | 100 | Herstellvorrichtung |
| 10 | Schildrohling | 102 | Rohlingszuführung |
| 12 | Schildplatine | 110 | Platinenzuführung |
| 14 | Folie | 114 | metallisches Band |
| 16 | Kleberschicht | 116 | Vorratsrolle metallisches Band |
| 18 | farbig bedruckter Bereich | 120 | Folienzuführung |
| 20 | erstes zusätzliches Sicher-heitsmerkmal | 122 | Vorratsrolle Folie |
| 22 | zweites zusätzliches Sicher-heitsmerkmal | 126 | Aufnahmerolle |
| 30 | Sicherheitsstruktur | 128 | Papierliner |
| 32 | erhabener Rand | 130 | Laminierstation |
| 34 | Kennzeichenlegende | 132 | Andruckrolle |
| | | 140 | Stanzeinheit |
| | | 150 | Strukturierungseinheit |

## Patentansprüche

1. Verfahren zur Herstellung eines Kfz-Kennzeichenschilds (1), mit den folgenden Verfahrensschritten:
a) Bereitstellen eines flächenhaft ausgedehnten Schildrohlings (10), und
b) Einbringen einer optisch wahrnehmbaren, flächenhaft ausgedehnten Sicherheitsstruktur (30) in die vorderseitige Oberfläche des Schildrohlings (10), wobei die eingebrachte Sicherheitsstruktur (30) einen auf optischer Interferenz beruhenden optischen Effekt zeigt, insbesondere einen Farbeffekt, und auf flächenhaft ausgedehnten, regelmäßigen, erhabenen oder vertieften Strukturen in der Oberfläche des Schildrohlings (10) beruht,
**dadurch gekennzeichnet, dass** die optisch wahrnehmbare Sicherheitsstruktur (30) mittels Interferenz von zumindest zwei Laserstrahlen in die vorderseitige Oberfläche des Schildrohlings (10) eingebracht wird.

2. Verfahren gemäß Anspruch 1, **dadurch gekennzeichnet, dass** die Laserstrahlen jeweils einen linienhaften Fokus aufweisen und sich die Foki auf bzw. in der Oberfläche der vorderseitigen Oberfläche des Schildrohlings (10) überlagern.

3. Verfahren gemäß Anspruch 1 oder 2, **dadurch gekennzeichnet, dass** der Schildrohling (10) und der Auftreffpunkt der Laserstrahlen auf dem Schildrohling (10) senkrecht zur Ausdehnungsrichtung der Foki relativ zueinander bewegt werden.

4. Verfahren gemäß Anspruch 1, **dadurch gekennzeichnet, dass** die optisch wahrnehmbare Sicherheitsstruktur (30) eine Mehrzahl diskreter Oberflächenbereiche umfasst, die zumindest zwei verschiedene Farbeffekte aufweisen.

5. Vorrichtung (100) zur Herstellung eines Kfz-Kennzeichenschilds (1), mit den folgenden Merkmalen:
a) einer Rohlingszuführung (102) zur Bereitstellung eines Schildrohlings (10), und
b) einer Strukturierungseinheit (150), die dazu eingerichtet ist, eine optisch wahrnehmbare, flächenhaft ausgedehnte Sicherheitsstruktur (30) in die vorderseitige Oberfläche des Schildrohlings (10) einzubringen, wobei die eingebrachte Sicherheitsstruktur (30) einen auf optischer Interferenz beruhenden Farbeffekt zeigt, und auf regelmäßigen, erhabenen oder vertieften Strukturen in der Oberfläche des Schildrohlings (10) beruht,
**dadurch gekennzeichnet, dass** die Strukturierungseinheit (150) einen Laser zur Erzeugung eines Laserstrahls umfasst und dazu eingerichtet ist, die optisch wahrnehmbare Sicherheitsstruktur (30) mittels Interferenz von zumindest zwei Laserstrahlen in die Oberfläche des Schildrohlings (10) einzubringen.

6. Vorrichtung (100) gemäß Anspruch 5, **dadurch gekennzeichnet, dass** die Strukturierungseinheit (150) dazu eingerichtet ist, eine optisch wahrnehmbare Sicherheitsstruktur (30) zu erzeugen, die eine Mehrzahl diskreter Oberflächenbereiche (32, 34, 36, 38) umfasst, welche zumindest zwei verschiedene Farbeffekte aufweisen.

7. Vorrichtung (100) gemäß Anspruch 5, **dadurch gekennzeichnet, dass** die Laserstrahlen jeweils einen linienhaften Fokus aufweisen und sich die Foki auf bzw. in der Oberfläche des Schildrohlings (10) überlagern.

8. Vorrichtung (100) gemäß Anspruch 7, **dadurch gekennzeichnet, dass** die Vorrichtung (100) dazu eingerichtet ist, den Schildrohling (10) und den Auftreffpunkt der Laserstrahlen auf dem Schildrohling (10) senkrecht zur Ausdehnungsrichtung der Foki kontrolliert relativ zueinander zu bewegen.

## Claims

1. A method for producing a motor vehicle license plate (1) comprising the following method steps:
a) providing a two-dimensionally extending plate blank (10), and
b) incorporating a optically perceptible, two-dimensionally extending security pattern (30) into the front surface of the plate blank (10), wherein the incorporated security pattern (30) exhibits an optical effect, in particular a color effect, based on optical interference, and wherein wherein the incorporated security pattern (30) is based on two-dimensionally extending, regular, raised or depressed patterns in the surface of the plate blank (10),
**characterized in that** the optically perceptible security pattern (30) is incorporated into the front surface of the plate blank (10) by means of the interference of at least two laser beams.

2. The method according to claim 1, **characterized in that** the laser beams each have a line-shaped focus, and the foci superpose one another on or in the surface of the front surface of the plate blank (10).

3. The method according to claim 1 or 2, **characterized in that** the plate blank (10) and the point of incidence of the laser beams on the plate blank (10) are moved relative to each other perpendicularly to the extension direction of the foci.

4. The method according to claim 1, **characterized in that** the optically perceptible security pattern (30) includes a plurality of discrete surface regions having at least two different color effects.

5. A device (100) for producing a motor vehicle license plate (1) comprising the following features:
a) a blank feed (102) for providing the plate blank (10), and
b) a patterning unit (150) configured for incorporating a optically perceptible, two-dimensionally extending security pattern (30) into the front surface of the plate blank (10), wherein the incorporated security pattern (30) exhibits a color effect based on optical interference, and wherein wherein the incorporated security pattern (30) is based on regular, raised or depressed patterns in the surface of the plate blank (10),
**characterized in that** the patterning unit (150) includes a laser for generating a laser beam and is configured for incorporating the optically perceptible security pattern (30) into the front surface of the plate blank (10) by means of the interference of at least two laser beams.

6. The device (100) according to claim 5, **characterized in that** the patterning unit (150) is configured for producing a optically perceptible security pattern (30) including a plurality of discrete surface regions (32, 34, 36, 38) that have at least two different color effects.

7. The device (100) according to claim 5, **characterized in that** the laser beams each have a line-shaped focus, and the foci superpose one another on or in the surface of the plate blank (10).

8. The device (100) according to claim 7, **characterized in that** the device (100) is configured for moving, in a controlled manner, the plate blank (10) and the point of incidence of the laser beams on the plate blank (10) relative to each other perpendicularly to the extension direction of the foci.

## Revendications

1. Procédé de fabrication d'une plaque d'immatriculation (1) comprenant les étapes de procédé suivantes consistant à:
a) fournir une ébauche de plaque (10) étendue en nappe,
et
b) réaliser une structure de sécurité (30) optiquement perceptible et étendue en nappe, dans la surface avant de l'ébauche de plaque (10), ladite structure de sécurité (30) réalisée présentant un effet optique basé sur une interférence optique, en particulier un effet de couleur, et étant basée sur des structures étendues en nappe, régulières, en relief ou en creux dans la surface de l'ébauche de plaque (10),
**caractérisé par le fait que** la structure de sécurité (30) optiquement perceptible est réalisée au moyen d'interférence d'au moins deux faisceaux laser dans la surface avant de l'ébauche de plaque (10).

2. Procédé selon la revendication 1, **caractérisé par le fait que** les faisceaux laser présentent chacun un foyer linéaire et que les foyers se superposent l'un à l'autre sur ou bien dans la surface de la surface avant de l'ébauche de plaque (10).

3. Procédé selon la revendication 1 ou 2, **caractérisé par le fait que** l'ébauche de plaque (10) et le point d'impact des faisceaux laser sur l'ébauche de plaque (10) sont déplacés l'un par rapport à l'autre perpendiculairement à la direction d'extension des foyers.

4. Procédé selon la revendication 1, **caractérisé par le fait que** la structure de sécurité (30) optiquement perceptible comprend une pluralité de zones de surface discrètes qui présentent au moins deux effets de couleur différents.

5. Dispositif (100) de fabrication d'une plaque d'immatriculation (1), comprenant les caractéristiques suivantes:
a) un dispositif d'amenée d'ébauche (102) pour fournir une ébauche de plaque (10), et
b) une unité de structuration (150) qui est adaptée pour réaliser une structure de sécurité (30) optiquement perceptible et étendue en nappe, dans la surface avant de l'ébauche de plaque (10), ladite structure de sécurité (30) réalisée présentant un effet de couleur basé sur une interférence optique et étant basée sur des structures régulières en relief ou en creux dans la surface de l'ébauche de plaque (10),
**caractérisé par le fait que** ladite unité de structuration (150) comprend un laser pour générer un faisceau laser et est adaptée pour réaliser la structure de sécurité (30) optiquement perceptible, au moyen d'interférence d'au moins deux faisceaux laser, dans la surface de l'ébauche de plaque (10).

6. Dispositif (100) selon la revendication 5, **caractérisé par le fait que** l'unité de structuration (150) est adaptée pour produire une structure de sécurité (30) optiquement perceptible qui comprend une pluralité de zones de surface discrètes (32, 34, 36, 38) qui présentent au moins deux effets de couleur différents.

7. Dispositif (100) selon la revendication 5, **caractérisé par le fait que** les faisceaux laser présentent chacun un foyer linéaire et que les foyers se superposent l'un à l'autre sur ou bien dans la surface de l'ébauche de plaque (10).

8. Dispositif (100) selon la revendication 7, **caractérisé par le fait que** le dispositif (100) est adapté pour déplacer, l'un par rapport à l'autre, l'ébauche de plaque (10) et le point d'impact des faisceaux laser sur l'ébauche de plaque (10), de manière contrôlée et perpendiculairement à la direction d'extension des foyers.
